# EUROPÄISCHE PATENTSCHRIFT

(11) **EP 0 789 043 B1**
(45) Veröffentlichungstag und Bekanntmachung des Hinweises auf die Patenterteilung: **09.04.2003**
(21) Anmeldenummer: 97101185.3
(22) Anmeldetag: 27.01.1997
(51) Int. Cl.: C08G 18/38, C08G 18/42, C08G 18/80, C09D 175/04

(54) **Polyurethan-Pulvermattlacke**
Matt polyurethane powder coatings
Revêtements en poudre mats de polyuréthane

(30) Priorität: 08.02.1996 DE 19604581
(43) Veröffentlichungstag der Anmeldung: 13.08.1997
(73) Patentinhaber: BAYER AG, 51368 Leverkusen (DE)
(72) Erfinder: Laas, Hans-Josef, Dr., 50733 Köln (DE); Meier-Westhues, Hans-Ulrich, Dr., 51379 Leverkusen (DE); Halpaap, Reinhard, Dr., 51519 Odenthal (DE); Freudenberg, Ulrich, Dr., 50259 Pulheim (DE); Klee, Hans-Peter, 51399 Burscheid (DE)

(56) Entgegenhaltungen:
- EP-A- 0 104 424
- EP-A- 0 744 421
- WO-A-92/01756

## Beschreibung

Die Erfindung betrifft einen Pulverlack zur Herstellung matter Beschichtungen.

Die Entwicklung von Pulverlacken gewann in den letzten Jahren neben der Entwicklung von high-solids-Lacken und wäßrigen Beschichtungssystemen zunehmend an Bedeutung. Pulverlacke setzen bei der Applikation keinerlei schädliche Lösemittel frei, lassen sich mit sehr hohem Materialausnutzungsgrad verarbeiten und gelten daher als besonders umweltfreundlich und wirtschaftlich.

Qualitativ besonders hochwertige, licht- und wetterbeständige Beschichtungen lassen sich mit hitzehärtbaren Pulverlacken auf Polyurethanbasis herstellen. Die heute im Markt etablierten Polyurethan(PUR)-Pulverlacke bestehen im allgemeinen aus festen Polyesterpolyolen, die mit festen aliphatischen oder cycloaliphatischen Polyisocyanaten, im allgemeinen in blockierter Form ausgehärtet werden.

Für verschiedene Anwendungen, beispielsweise zur Beschichtung von Büromöbeln, Elektro- und Elektronikgeräten oder für rein dekorative Beschichtungen, besteht ein großes Interesse an Pulverlacken, die bei der Aushärtung matte Oberflächen ergeben. Auch für die Beschichtung von Fassadenteilen sind glänzende, stark reflektierende Lacksysteme häufig unerwünscht. Es hat daher nicht an Versuchen gefehlt, Pulvermattlacke auf PUR-Basis zu entwickeln.

Die Mitverwendung von feinteiligen mineralischen oder polymeren Mattierungsmitteln, eine bei Naßlacken gebräuchliche Methode zur Einstellung niedriger Glanzgrade, führt in Pulverlacksystemen im allgemeinen nicht zum gewünschten Erfolg; die Beschichtungen verlieren mit steigendem Gehalt an Mattierungsmittel zunehmend an mechnischen Eigenschaften. Auch das in den DE-A 2 147 653 und 2 247 779 beschriebene "trockene" Mischen zweier getrennt hergestellter, farbtonmäßig gleich formulierter Lackpulver unterschiedlicher Bindemittelbasis ergibt nur wenig befriedigende Ergebnisse. Insbesondere dann, wenn anfallender Lackoverspray recyclisiert werden soll, sind die auf diese Weise erzielbaren Matteffekte nur schlecht reproduzierbar.

Polyurethan-Pulverlacke, die reproduzierbar zu matten Beschichtungen aushärten, erhält man z.B. nach der Lehre der DE-A 338 129 aus Polyesterpolyolen und ε-Caprolactam-blockierten Polyisocyanatvernetzern auf Basis des Isophorondiisocyanates (IPDI) bei gleichzeitigem Zusatz des hochschmelzenden Pyromellithsäuredianhydrids (Schmp.: 284 - 286°C). Pulverbeschichtungen mit niedrigem Glanzgrad resultieren auch, wenn Polyesterpolyole mit speziellen ε-Caprolactam-blockierten Derivaten von trans-1,4-Diisocyanatocyclohexan mit einem Schmelzbereich oberhalb 140°C, wie sie z.B. in der DE-A 3 711 374 beschrieben sind, oder mit Polyadditionsverbindungen auf Basis von IPDI-Uretdionpolyisocyanaten mit Schmelzpunkten oberhalb 130°C, vorzugsweise oberhalb 140°C, wie sie entsprechend der Lehre der DE-A 3 328 133 erhältlich sind, kombiniert werden.

Den Pulverlacken dieser Veröffentlichungen ist gemeinsam, daß sie jeweils eine Reaktionskomponente enthalten, die einen Schmelzpunkt deutlich oberhalb den bei der Herstellung von Pulverlacken üblichen Extrusionstemperaturen (im allgemeinen 80 bis 120°C) aufweist. Die erzielbaren Matteffekte beruhen in allen Fällen auf einer ungenügenden Durchmischung der Reaktionspartner während der Schmelzextrusion. Aufgrund der im Lackpulver vorliegenden Inhomogenitäten weisen die mit Hilfe der genannten Pulverlacksysteme erhältlichen Beschichtungen in der Regel nur mäßige lacktechnische Eigenschaften auf.

Die Verwendung von Kombinationen aus speziellen Carboxylgruppen aufweisenden blockierten Polyisocyanaten und Polyepoxidvernetzern, wie z.B. Triglycidylisocyanurat (TGIC), als Härterkomponente für pulverförmige hydroxyfunktionelle Bindemittel sind Gegenstand der DE-A 3 232 463. Solche "3-Komponenten"-Pulverlackysyteme ergeben nach dem Einbrennen zwar hoch wetterbeständige Beschichtungen mit reproduzierbar einstellbaren Matteffekten, die hierfür benötigten speziellen, gleichzeitig Carboxylgruppen und blockierte Isocyanatgruppen aufweisenden Vernetzerkomponenten lassen sich allerdings nur in einem aufwendigen und teuren Verfahren in Lösung mit nachfolgendem Ausdampfschritt produzieren.

Gleiches gilt auch für die in der DE-A 3 739 479 als Vernetzer für matte Polyurethan-Pulverlacke vorgeschlagenen, durch Umsetzung teilblockierter Diisocyanate mit Di- oder Polyaminen zugänglichen ε-Caprolactam-blockierten Harnstoffpolyisocyanate, deren Synthese ebenfalls nur in Lösung gelingt. Im technischen Maßstab ist das beschriebene Herstellverfahren aufgrund der bekanntermaßen extrem hohen Reaktivität von Isocyanatgruppen gegenüber aliphatischen Aminen allerdings nur schwer realisierbar.

Nach der Lehre der EP-A 533 750 ergeben Pulverlacke aus einem Gemisch zweier Hydroxylpolyester unterschiedlicher OH-Zahl und Reaktivität in Kombination mit kommerziell verfügbaren abspalterfreien Uretdion-Pulverlackvernetzern auf IPDI-Basis ebenfalls matte Polyurethanüberzüge. Dieses Verfahren ist jedoch auf die Verwendung sehr spezieller Polyesterpolyole beschränkt und nicht ohne weiteres auf beliebige Bindemittel übertragbar.

Es war daher die der vorliegenden Erfindung zugrunde liegende Aufgabe, neue Polyurethan-Pulverlacke zur Verfügung zu stellen, die zu lösemittel- und chemikalienbeständigen Beschichtugen mit reproduzierbar einstellbaren niedrigen Glanzgraden aushärten.

Diese Aufgabe konnte mit der Bereitstellung der erfindungsgemäßen Pulverlacke gelöst werden. Die so erfindungsgemäßen Pulverlacke beruhen auf der überraschenden Beobachtung, daß Polyurethan-Pulverlacke, bestehend aus einem Polyesterpolyol und einem blockierte Isocyanatgruppen enthaltenden Pulverlackvernetzer, die im allgemeinen zu hochglänzenden Lackfilmen einbrennen, völlig matte Beschichtungen ergeben, wenn man der Formulierung zusätzlich eine Kombination aus einer Carboxyl- und/oder Carbonsäureanhydridgruppen aufweisenden Vernetzerkomponente und einer weiteren gegenüber Carboxyl- und/oder Carbonsäureanhydridgruppen reaktive Gruppen aufweisenden Vernetzerkomponente hinzufügt und alle Komponenten durch Schmelzextrusion homogenisiert.

Dies war überraschend, da Pulverlacke, bestehend aus einem Polyesterpolyol, einem blockierten Polyisocyanat und nur einer weiteren, beispielsweise nur einer Carboxyl- und/oder Carbonsäureanhydridgruppen aufweisenden Vernetzerkomponente oder aber nur einer gegenüber Carboxyl- und/oder Carbonsäureanhydridgruppen reaktiven Vernetzerkomponente hochglänzende Beschichtungen liefern, und auch die Kombination aus einer Carboxyl- und/oder Carbonsäureanhydridgruppen aufweisenden und einer gegenüber Carboxyl- und/oder Carbonsäureanhydridgruppen reaktive Gruppen aufweisenden Komponente für sich alleine einen glänzenden Film ergibt.

Es war daher keineswegs zu erwarten, daß die nachfolgend näher beschriebenen erfindungsgemäßen Pulverlacke zu matten Oberflächen aushärten, insbesondere auch deshalb nicht, weil bekannt ist, daß der Zusatz einer Kombination aus einem hochmolekularen Carboxylgruppen aufweisenden Pulverlackbindemittel und einer gegenüber diesem Bindemittel reaktiven Komponente, beispielsweise einem Polyepoxidvernetzer, zu einem Polyurethanpulverlack ebenfalls ein glänzend aushärtendes Beschichtungsmaterial liefert. Ungeachtet der oben beschriebenen Nachteile ist es in der Praxis zwar durchaus üblich, matte Pulverbeschichtungsmittel nach dem beispielsweise in den DE-A 2 147 653 und 2 247 779 beschriebenen Verfahren durch "trockenes" Mischen und anschließendes gemeinsames Vermahlen zweier getrennt formulierter Pulverlacke unterschiedlicher chemischer Basis und Reaktivität, beispielsweise eines Polyurethanpulverlackes und eines zweiten, beispielsweise aus einem Carboxylpolyester und einem Polyepoxidvernetzer bestehenden Pulverlackes, herzustellen, die Homogenisierung der beiden Reaktivsysteme durch Schmelzextrusion ergibt jedoch immer Pulverlacke von hohem Glanz.

Gegenstand der Erfindung ist ein Pulverlack zur Herstellung matter Beschichtungen aus
A) einer unterhalb von 40°C in fester und oberhalb von 130°C in flüssiger Form vorliegenden Hydroxylgruppen aufweisenden Bindemittelkomponente mit einer OH-Zahl von 25 bis 200 und einem mittleren (aus der Funktionalität und dem Hydroxylgehalt berechenbaren) Molekulargewicht von 400 bis 10000,
B) einem unterhalb von 40°C in fester und oberhalb von 125°C in flüssiger Form vorliegenden blockierte und gegebenenfalls freie Isocyanatgruppen aufweisenden Polyisocyanat auf Basis aliphatischer und/oder cycloaliphatischer Diisocyanate,
C) einer unterhalb von 40°C in fester und oberhalb von 160°C in flüssiger Form vorliegender Carboxyl- und/oder Carbonsäureanhydridgruppen aufweisenden Komponente, bestehend aus mindestens einer Komponente ausgewählt aus
   C1) aliphatischen und/oder cycloaliphatischen Dicarbonsäuren mit 4 bis 20 Kohlenstoffatomen,
   C2) monomeren und/oder polymeren gegebenfalls modifizierten Anhydriden derartiger Dicarbonsäuren und
   C3) aliphatischen Hydroxycarbonsäuren mit 4 bis 18 Kohlenstoffatomen,
D) einer gegenüber Carboxyl- und/oder Carbonsäureanhydridgruppen reaktive Gruppen aufweisenden Komponente eines mittleren Molekulargewichts von 200 bis 5000,
und gegebenenfalls
E) aus der Pulverlacktechnologie bekannten Hilfs- und Zusatzstoffen,
dadurch gekennzeichnet, daß die Komponenten A), B), C) und D) in solchen Mengenverhältnissen vorliegen, daß auf jede Hydroxylgruppe der Komponente A) 0,6 bis 1,4 Isocyanatgruppen der Komponente B) entfallen, wobei unter Isocyanatgruppen der Komponente B) die Summe aus in mit Blockierungsmitteln blockierter Form vorliegenden Isocyanatgruppen und freien Isocyanatgruppen verstanden wird, auf jedes Carboxyl-Äquivalent der Komponente C) 0,3 bis 1,5 gegenüber Carboxyl- und/oder Carbonsäureanhydridgruppen reaktive Gruppen der Komponente D) entfallen, wobei eine Carboxylgruppe einem und eine Carbonsäureanhydridgruppe zwei Carboxyl-Äquivalenten entspricht, und der Anteil der Komponenten C) und D) bezogen auf die Gesamtmenge der Komponenten A), B), C) und D) 10 bis 40 Gew.-% beträgt.

Gegenstand der Erfindung ist auch die Verwendung dieses Pulverlackes zur Beschichtung beliebiger hitzeresistenter Substrate.

Bei der in den erfindungsgemäßen Pulverlacken enthaltenen Komponente A) handelt es sich um beliebige aus der Pulverlacktechnologie bekannte Hydroxylgruppen aufweisende Bindemittel mit einer Hydroxylzahl von 25 bis 200, vorzugsweise von 30 bis 150, einem mittleren (aus der Funktionalität und dem Hydroxylgehalt berechenbaren) Molekulargewicht von 400 bis 10000, vorzugsweise von 1000 bis 5000, die unterhalb von 40°C fest und oberhalb 130°C flüssig sind.

Derartige Bindemittel sind beispielsweise hydroxylgruppenhaltige Polyester, Polyacrylate oder Polyurethane, wie sie z. B. in der EP-A 45 998 oder der EP-A 254 152 als Pulverlackbindemittel beschrieben sind, aber auch beliebige Mischungen solcher Harze.

Bevorzugt handelt es sich bei der Komponente A) um hydroxylgruppenhaltige Polyester, deren Erweichungstemperatur - bestimmt nach der Differential-Thermoanalyse (DTA) - innerhalb des Temperaturbereiches von 40 bis 120°C, besonders bevorzugt innerhalb des Temperaturbereiches von 45 bis 110°C, liegt.

Bei der in den erfindungsgemäßen Pulverlacken enthaltenen Komponente B) handelt es sich um beliebige aus der Pulverlacktechnologie als Vernetzerkomponenten für hydroxyfunktionelle Bindemittel bekannte blockierte Polyisocyanate auf Basis aliphatischer und/oder cycloaliphatischer Diisocyanate, die einen Gehalt an blockierten Isocyanatgruppen (berechnet als NCO; Molekulargewicht = 42) von 5 bis 20 Gew.-%, vorzugsweise von 8 bis 17 Gew.-%, und an freien Isocyanatgruppen von weniger als 2 Gew.-%, vorzugsweise von weniger als 1 Gew.-%, aufweisen und die unterhalb von 40°C in fester und oberhalb von 125°C in flüssiger Form vorliegen.

Die Herstellung solcher blockierter Polyisocyanatvernetzer durch Umsetzung von Polyisocyanaten mit gegenüber Isocyanatgruppen reaktiven Blockierungsmitteln ist an sich bekannt.

Als Ausgangskomponenten für die in den erfindungsgemäßen Pulverlacken vorliegenden blockierten Polyisocyanate eignen sich beliebige aliphatische bzw. cycloaliphatische Diisocyanate, wie z.B. 1,4-Butandiisocyanat (BDI), 1,6-Hexamethylendiisocyanat (HDI), IPDI, 4,4'-Diisocyanatodicyclohexylmethan, 2,4(6)-Diisocyanato-1-methylcyclohexan, 1,4-Diisocyanatocyclohexan oder beliebige Gemische solcher Diisocyanate. Im Sinne der vorliegenden Erfindung gelten darüber hinaus auch Diisocyanate mit Arylstrukturen als aliphatisch bzw. cycloaliphatisch, sofern ihre Isocyanatgruppen an Alkyl- bzw. Cycloalkyl-Kohlenstoffatomen und nicht direkt am Aromaten gebunden sind. Geeignete Ausgangsdiisocyanate zur Herstellung blockierter Polyisocyanate sind daher beispielsweise auch 1,3- bzw. 1,4-Bis(isocyanatomethyl)benzol oder 1,3- bzw. 1,4-Bis(2-isocyanatoprop-2-yl)benzol.

Als Blockierungsmittel können prinzipiell sämtliche in der Polyurethanchemie gebräuchlichen, gegenüber Isocyanatgruppen reaktiven Blockierungsmittel eingesetzt werden.

Bei der in den erfindungsgemäßen Pulverlacken vorliegenden Komponente B) handelt es sich beispielsweise um mit ε-Caprolactam blockierte Derivate des 1-Isocyanato-3,3,5-trimethyl-5-isocyanatomethylcyclohexans (Isophorondiisocyanat; IPDI), wie sie z.B. in den DE-A 2 105 777, 2 542 191, 3 143 060, 2 735 497 und 2 842 641 beschrieben sind mit ε-Caprolactam blockierte Urethane bzw. Isocyanurate des 1,4-Diisocyanatocyclohexans der in der EP-A 286 799 genannten Art oder mit ε-Caprolactam blockierte einfache Diisocyanate, wie z.B. 1,4-Diisocyanatocyclohexan (EP-A 218 040), 4,4'-Diisocyanatodicyclohexylmethan (EP-A 460 963), 1,3-Bis(isocyanatomethyl)benzol (DE-A 2 801 126) und 1,3- oder 1,4-Bis(2-isocyanatoprop-2-yl)benzol (EP-A 403 779, WO 91/15532). Daneben stellen auch mit Ketoximen blockierte Polyisocyanate, beispielsweise mit Butanonoxim blockiertes IPDI oder 4,4'-Diisocyanatodicyclohexylmethan US-P 3 857 818), mit Acetonoxim blockiertes 1,4-Bis(isocyanatomethyl)benzol (US-P 4 375 539) oder mit Diisopropylketoxim bzw. Diisobutylketoxim blockiertes IPDI, 4,4'-Diisocyanatodicyclohexylmethan oder 1,3- bzw. 1,4-Bis(2-isocyanatoprop-2-yl)benzol (EP-A 409 745) aber auch mit Triazolen (DE-A 2 812 252), cyclischen Amidinen (DE-A 2 946 085) oder sekundären Aminen (DE-A 3 434 881) blockierte Polyisocyanate geeignete Ausgangskomponenten B) dar.

Bevorzugte blockierte Polyisocyanate B) sind solche auf Basis von IPDI, 4,4'-Diisocyanatodicyclohexylmethan oder 2,4(6)-Diisocyanato-1-methylcyclohexan mit ε-Caprolactam als Blockierungsmittel.

Die Komponente B) wird in dem erfindungsgemäßen Pulverlack in solchen Mengen eingesetzt, daß auf jede Hydroxylgruppe der Bindemittelkomponente A) 0,6 bis 1,4 vorzugsweise 0,8 bis 1,2 Isocyanatgruppen der Komponente B) entfallen, wobei unter Isocyanatgruppen der Komponente B) die Summe aus in mit Blockierungsmitteln blockierter Form vorliegenden Isocyanatgruppen und freien Isocyanatgruppen verstanden wird.

Bei der in den erfindungsgemäßen Pulverlacken enthaltenen Komponente C) handelt es sich um Carboxyl- und/oder Carbonsäureanhydridgruppen aufweisende Komponenten, bestehend aus mindestens einer Komponente ausgewählt aus
C1) aliphatischen und/oder cycloaliphatischen Dicarbonsäuren mit 4 bis 20 Kohlenstoffatomen,
C2) monomeren und/oder polymeren gegebenenfalls modifizierten Anhydriden deartiger Dicarbonsäuren und
C3) aliphatischen Hydroxycarbonsäuren mit 4 bis 18 Kohlenstoffatomen.

Geeignete Dicarbonsäuren C1) sind beispielsweise Bernsteinsäure, Glutarsäure, Adipinsäure, Pimelinsäure, Suberinsäure, Azelainsäure, Sebacinsäure, Dodecandisäure (1,10-Decandicarbonsäure) oder Hexahydrophthalsäure.

Geeignete Komponenten C2) sind beispielsweise monomere Anhydride derartiger Dicarbonsäuren, wie Bernsteinsäure-, Glutarsäure- oder Hexahydrophthalsäureanhydrid, oder polymere Anhydride deartiger Dicarbonsäuren, wie sie durch intermolekulare Kondensation der genannten Säuren oder deren Gemische erhalten werden können. Konkrete Beispiele sind Adipinsäure(poly)anhydrid, Azelainsäure-(poly)anhydrid, Sebacinsäure(poly)anhydrid oder Dodecandisäure(poly)anhydrid. Das gelpermeationschromatographisch unter Verwendung von Polystyrol als Standard ermittelte Molekulargewicht Mw dieser Polyanhydride liegt im allgemeinen bei 1000 bis 5000. Die Herstellung der Polyanhydride erfolgt beispielsweise durch Reaktion der Dicarbonsäuren bzw. der Dicarbonsäuregemische mit Essigsäureanhydrid bei Temperaturen von 120 bis 200°C, vorzugsweise 120 bis 170°C. Die dabei abgespaltene Essigsäure wird beispielsweise durch Destillation unter Vakuum entfernt.

Geeignete Komponenten C2) sind auch modifizierte Anhydride der unter C1) genannten Dicarbonsäuren, beispielsweise Polyol-modifizierte Polyanhydride, wie sie gemäß der EP-A 299 420 zugänglich sind. In diesen Polyol-modifizierten Polyanhydriden liegt das Molverhältnis von Anhydridgruppen zu Carboxylgruppen im allgemeinen bei 0,04:1 bis 5:1, vozugsweise 1:1 bis 3:1

Geeignete Komponenten C2) stellen auch Polyisocyanat-modifizierte Polyanhydride dar, wie sie z.B. gemäß der DE-A 4 427 225 durch Umsetzung von Dicarbonsäuren und/oder Dicarbonsäure(poly)anhydriden mit beliebigen organischen Polyisocyanaten und gegebenenfalls weiteren gegenüber Anhydridgruppen reaktive Amino- und/oder Hydroxylgruppen aufweisenden Verbindungen erhältlich sind.

Solche Polyisocyanat-modifizierten Dicarbonsäure(poly)anhydride weisen im allgemeinen einen Gehalt an Carboxylgruppen (berechnet als CO₂H; Molekulargewicht = 45) von 0,5 bis 30 Gew.-%, einen Gehalt an Carbonsäureanhydridgruppen (berechnet als C₂O₃; Molekulargewicht = 72) von 5 bis 35 Gew.-% und einen Gehalt an in Amid- und/oder Harnstoffgruppen gebunden vorliegendem Stickstoff von 0,2 bis 8 Gew.-% auf.

Geeignete Hydroxycarbonsäuren C3) sind insbesondere solche, die einen zwischen 40 und 150°C liegenden Schmelzpunkt aufweisen. Hierzu gehören beispielsweise 2-Hydroxyisobuttersäure (81°C), 2-Hydroxyhexansäure (61°C), 10-Hydroxydecansäure (76°C), 12-Hydroxydodecansäure (86°C), 16-Hydroxyhexadecansäure (98°C) und 12-Hydroxyoctadecansäure (80°C).

Diese Hydroxycarbonsäuren werden im allgemeinen nur in Kombination mit vorzugsweise nicht modifizierten Polyanhydriden C2) in Mengen von bis zu 50 Gew.-%, bezogen auf das Gewicht der Polyanhydride, eingesetzt.

Besonders bevorzugt besteht die Komponente C) ausschließlich aus mindestens einer gesättigten aliphatischen Dicarbonsäure mit 4 bis 12 Kohlenstoffatomen, einem monomeren oder polymeren Anhydrid solcher Dicarbonsäuren oder einem durch aliphatische und/oder cycloaliphatische Polyisocyanate modifizierten Polyanhydrid derartiger Dicarbonsäuren.

Bei der in den erfindungsgemäßen Pulverlacken enthaltenen Komponente D) handelt es sich um gegenüber Carboxyl- und/oder Carbonsäureanhydridgruppen reaktive Gruppen aufweisende Verbindungen eines mittleren Molekulargewichts von 200 bis 5000, vorzugsweise von 200 bis 2000, besonders bevorzugt von 250 bis 1000, wie sie in der Pulverlacktechnologie im allgemeinen als Vernetzerkomponenten für carboxylgruppenhaltige Pulverlackbindemittel zum Einsatz kommen.

Geeignete Komponenten D) sind beispielsweise die an sich bekannten Polyepoxide, wie Triglycidylisocyanurat (TGIC) und Triglycidylurazol oder deren Oligomere, Glycidylether, z.B. solche auf Basis von Bisphenol A, Glycidylester, z.B. die der Phthalsäure, Tetrahydro- und Hexahydrophthalsäure oder beliebige Gemische solcher Polyepoxide.

Geeignete Komponenten D) sind beispielsweise auch β-Hydroxyalkylamidgruppen aufweisende Verbindungen, wie sie in der EP-A 322 834 als Vernetzerkomponenten für carboxylgruppenhaltige Polyester beschrieben sind. Die Herstellung solcher β-Hydroxyalkylamide erfolgt im allgemeinen durch basenkatalysierte Umsetzung organischer Polycarbonsäureester mit β-Hydroxyalkylaminen bei Temperaturen bis zu 200°C unter gleichzeitigem destillativen Entfernen des dabei entstehenden Alkohols.

Bevorzugt kommen in den erfindungsgemäßen Pulverlacken als Komponente D) TGIC oder β-Hydroxyalkylamide auf Basis gesättigter Dicarbonsäureester mit 4 bis 12 Kohlenstoffatomen im Dicarbonsäureteil zum Einsatz. Besonders bevorzugt besteht die Komponente D) aus einem β-Hydroxyalkylamid, wie es durch Umsetzung von Diethanolamin mit einem Gemisch aus Adipinsäuredimethylester und Glutarsäuredimethylester erhalten wird.

Die Komponente D) wird in dem erfindungsgemäßen Pulverlack in solchen Mengen eingesetzt, daß auf jedes Carboxyl-Äquivalent der Komponente C) 0,3 bis 1,5, vorzugsweise 0,4 bis 1,2, gegenüber Carboxyl- und/oder Carbonsäureanhydridgruppen reaktive Gruppen der Komponente D) entfallen, wobei eine Carboxylgruppe einem und eine Carbonsäureanhydridgruppe zwei Carboxyl-Äquivalenten entspricht.

Der Anteil der Komponenten C) und D) an der Gesamtmenge der Komponenten A), B), C) und D) beträgt in den erfindungsgemäßen Pulverlacken 10 bis 40 Gew.-%, vorzugsweise 15 bis 35 Gew.-%.

Gegebenenfalls kann der erfindungsgemäße Pulverlack auch die üblichen aus der Pulverlacktechnologie bekannten Hilfs- und Zusatzstoffe E) enthalten. Hierbei handelt es sich beispielsweise um Katalysatoren, wie z.B. Zinn(II)hexanoat, Zinn(II)octanoat, Zinn(II)laurat, Dibutylzinnoxid, Dibutylzinnchlorid, Dibutylzinndiacetat, Dibutylzinndilaurat, Dibutylzinnmaleat, Dioctylzinndiacetat, 1,4-Diazabicyclo[2.2.2]octan, 1,5-Diazabicyclo[4.3.0]non-5-en oder 1,8-Diazabicyclo[5.4.0]-undec-7-en. Gegebenenfalls kommen auch Katalysatorgemische zum Einsatz. Weitere Vertreter von geeigneten Katalysatoren sowie Einzelheiten über die Wirkungsweise von solchen Katalysatoren sind beispielsweise im Kunststoffhandbuch Band VII, Hrsg. Vieweg und Höchtlen, Carl-Hanser-Verlag, München 1966, Seite 96 bis 102 beschrieben. Katalysatoren als Zusatzmittel E) kommen, falls überhaupt, in Anteilen von 0,1 bis 5 Gew.-%, vorzugsweise 0,1 bis 3 Gew.-%, bezogen auf die Summe der Komponenten A), B), C) und D) zum Einsatz.

Weitere Hilfs- und Zusatzmittel E) sind beispielsweise auch Verlaufsmittel wie z.B. Polybutylacrylat oder solche auf Basis von Polysilikonen, Lichtschutzmittel, wie z.B. sterisch gehinderte Amine, UV-Absorber, wie z.B. Benztriazole oder Benzophenone und Pigmente, wie z.B. Titandioxid.

Zu den oftmals, gegebenenfalls neben weiteren Hilfs- und Zusatzmitteln, eingesetzten Zusatzmittel E) gehören insbesondere auch Farbstabilisatoren gegen die Gefahr der Überbrennvergilbung. Geeignet sind insbesondere, gegebenenfalls inerte Substituenten aufweisende, Trialkyl- und/oder Triarylphosphite wie beispielsweise Triethylphosphit, Triphenylphosphit oder bevorzugt Trisalkylphenylphosphite, wobei die Alkylsubstituenten 6 bis 12 Kohlenstoffatome aufweisen. Ganz besonders bevorzugt ist Trisnonylphenylphosphit (technisches Produkt, bestehend im wesentlichen aus einem Ester der phosphorigen Säure mit dem Anlagerungsprodukt von Tripropylen an Phenol).

Zur Herstellung des fertigen Pulverlackes werden die Bestandteile A), B), C), D) und gegebenenfalls E) innig miteinander vermischt und anschließend in der Schmelze zu einem homogenen Material vereinigt. Dies kann in geeigneten Aggregaten, beispielsweise beheizbaren Knetern, vorzugsweise jedoch durch Schmelzextrusion erfolgen, wobei die Extrusionstemperatur im allgemeinen so gewählt wird, daß ein Maximum an Scherkräften auf die Mischung einwirkt. Um eine vorzeitige Vernetzung des Pulverlackes zu vermeiden, sollte dabei allerdings eine Temperaturobergrenze von 120°C nicht überschritten werden.

Die Reihenfolge der Vereinigung der Einzelkomponenten A) bis E) ist bei diesem Verfahren weitgehend frei wählbar.

Eine im Sinne der vorliegenden Erfindung ebenfalls bevorzugte Art zur Herstellung eines fertigen Pulverlackes ist es beispielsweise auch, in einem ersten Schritt nur zwei der Einzelkomponenten, beispielsweise nur die Komponenten B) und C), in Schmelze, vorzugsweise unmittelbar im Anschluß an die Herstellung einer der Komponenten B) oder C), innig miteinander zu vermischen und erst zu einem späteren Zeitpunkt, in einem zweiten Schritt, zu dem dann resultierenden, aus den Komponenten B) und C) bestehenden lagerstabilen homogenen Material die übrigen Komponenten hinzuzufügen und alles gemeinsam zu extrudieren.

Unabhängig vom gewählten Verfahren werden die Mengenverhältnisse der Einzelkomponenten A), B), C) und D), wie bereits oben aufgeführt, im übrigen so gewählt, daß auf jede Hydroxylgruppe der Komponente A) 0,6 bis 1,4, vorzugsweise 0,8 bis 1,2 Isocyanatgruppen der Komponente B) entfallen, wobei unter Isocyanatgruppen der Komponente B) die Summe aus in mit Blockierungsmitteln blockierter Form vorliegenden Isocyanatgruppen und freien Isocyanatgruppen verstanden wird, und auf jedes Carboxyl-Äquivalent der Komponente C) 0,3 bis 1,5, vorzugsweise 0,4 bis 1,2, gegenüber Carboxyl- und/oder Carbonsäureanhydridgruppen reaktive Gruppen der Komponente D) entfallen, wobei eine Carboxylgruppe einem und eine Carbonsäureanhydridgruppe zwei Carboxyl-Äquivalenten entspricht. Gegebenenfalls in den Komponenten C) und/oder D) zusätzlich enthaltene Hydroxylgruppen bleiben bei der Wahl der Mengenverhältnisse der Einzelkomponenten unberücksichtigt. Das genannte Äquivalentverhältnis von Isocyanatgruppen zu Hydroxylgruppen bezieht sich ausschließlich auf das mengenmäßige Verhältnis von Komponente A) zu Komponente B).

Die extrudierte Masse wird nach Abkühlen auf Raumtemperatur und nach einer geeigneten Vorzerkleinerung zu einem Pulverlack gemahlen und durch Sieben von den Kornanteilen oberhalb der gewünschten Korngröße, beispielsweise oberhalb 0,1 mm, befreit.

Die so hergestellten Pulverlackformulierungen können nach üblichen Pulverauftragsverfahren, wie z.B. elektrostatischem Pulversprühen oder Wirbelsintern, auf die zu überziehenden Substrate aufgebracht werden. Die Härtung der Überzüge erfolgt durch Erhitzen auf Temperaturen von 120 bis 220°C, vorzugsweise 130 bis 200°C, beispielsweise während eines Zeitraums von ca. 10 bis 30 Minuten. Man erhält völlig matte, harte und elastische Beschichtungen, die sich durch einen hervorragenden Verlauf sowie gute Lösemittel- und Chemikalienbeständigkeit auszeichnen.

Erfindungsgemäß können beliebige hitzeresistente Substrate, wie beispielsweise Glas oder Metallen beschichtet werden.

### Beispiele

Alle %-Angaben, mit Ausnahme der Glanzwerte, beziehen sich auf das Gewicht.

### Herstellung der Ausgangskomponenten

### Blockiertes Polyisocyanat B-a)

222 Gew.-Teile 1-Isocyanato-3,3,5-trimethyl-5-isocyanatomethylcyclohexan (IPDI) werden in einem Reaktionsgefäß bei ca. 100°C vorgelegt und ohne weiteres Heizen bei dieser Temperatur portionsweise mit 113 Gew.-Teilen ε-Caprolactam versetzt. Man läßt die exotherme Reaktion im Bereich von 100 bis 130°C ablaufen und erreicht nach ca. 20minütigem Nachrühren bei dieser Temperatur den berechneten NCO-Gehalt von ca. 12,5 %. Ohne Abzukühlen werden dann bei ca. 120°C 31 Gew.-Teile Ethylenglykol zugegeben. Anschließend rührt man die viskoser werdende Schmelze bei dieser Temperatur ca. 3 Stunden nach, bis der Gehalt an freien NCO-Gruppen weniger als 0,5 % beträgt und nicht weiter abnimmt. Die Schmelze wird zum Erkalten auf ein Blech gegossen, und man erhält ein lagerstabiles praktisch farbloses Festharz mit einem Schmelzpunkt - bestimmt nach der Differential-Thermoanalyse (DTA) - von ca. 65°C, einem Gehalt an blockierten NCO-Gruppen (berechnet als NCO; Molekulargewicht = 42) von 11,5 % und an freien NCO-Gruppen von 0,4 %.

### Blockiertes Polyisocyanat B-b)

524 Gew.-Teile 4,4'-Diisocyanatodicyclohexylmethan werden in einem Reaktionsgefäß bei ca. 100°C vorgelegt und ohne weiteres Heizen bei dieser Temperatur portionsweise mit 226 Gew.-Teilen ε-Caprolactam versetzt. Man läßt die exotherme Reaktion im Bereich von 100 bis 130°C ablaufen und erreicht nach ca, 20minütigem Nachrühren bei dieser Temperatur den berechneten NCO-Gehalt von ca. 11,2 %. Ohne Abzukühlen werden dann bei ca. 120°C 118 Gew.-Teile 1,6-Hexandiol zugegeben. Anschließend rührt man die viskoser werdende Schmelze bei dieser Temperatur ca. 3 Stunden nach, bis der Gehalt an freien NCO-Gruppen weniger als 0,5 % beträgt und nicht weiter abnimmt. Die Schmelze wird zum Erkalten auf ein Blech gegossen, und man erhält ein lagerstabiles helles Festharz mit einem Schmelzpunkt (DTA) von ca 55°C, einem Gehalt an blockierten NCO-Gruppen von 9,7 % und an freien NCO-Gruppen von 0,2 %

### Blockiertes Polyisocyanat B-c)

Zu 3144 Gew.-Teilen 4,4'-Diisocyanatodicyclohexylmethan werden in einem Reaktionsgefäß unter Stickstoff bei 60°C 9 Gew.-Teile einer 15 %igen Lösung von Benzyltrimethylammoniumhydroxid in 2-Ethyl-1-hexanol als Katalysator zugetropft. Man hält die Temperatur des Reaktionsgemisches bei 65 bis 70°C, bis der NCO-Gehalt durch katalytische Trimerisierung nach etwa 90 min auf einen Wert von ca. 23 % abgesunken ist. Die Reaktion wird durch Zugabe von 3 Gew.-Teilen Bis(2-ethylhexyl)phosphat und Aufheizen auf eine Temperatur von 100°C abgestoppt. Nach einer Nachrührzeit von ca. 60 min bei 100°C gibt man zunächst ohne weiteres Heizen bei dieser Temperatur portionsweise 1995 Gew.-Teile e-Caprolactam zu. Gegen Ende der Zugabe wird das viskoser werdende Reaktionsgemisch auf 135 bis 140°C aufgeheizt und ca. 40 min nachgerührt, bis der Gehalt an freien Isocyanatgruppen auf weniger als 0,7 % gefallen ist. Die Schmelze wird zum Erkalten auf ein Blech gegossen, und man erhält ein lagerstabiles farbloses Festharz mit einem Schmelzpunkt (DTA) von ca. 50°C, einem Gehalt an blockierten NCO-Gruppen von 14,2 % und an freien NCO-Gruppen von 0,5 %.

### Blockiertes Polyisocyanat B-d)

360 Gew.-Teile eines Diisocyanatgemisches, bestehend zu 80 % aus 2,4-Diisocyanato-1-methylcyclohexan und zu 20 % aus 2,6-Diisocyanato-1-methylcyclohexan, werden in einem Reaktionsgefäß bei ca. 100°C vorgelegt und ohne weiteres Heizen bei dieser Temperatur portionsweise mit 226 Gew.-Teilen ε-Caprolactam versetzt. Man läßt die exotherme Reaktion im Bereich von 100 bis 130°C ablaufen und erreicht nach ca. 20minütigem Nachrühren bei dieser Temperatur den berechneten NCO-Gehalt von ca. 14,3 %. Ohne Abzukühlen werden dann bei ca. 120°C 65 Gew.-Teile 1,6-Hexandiol und 40 Gew.-Teile Trimethylolpropan (TMP) zugegeben. Anschließend rührt man die viskoser werdende Schmelze bei dieser Temperatur ca. 3 Stunden nach, bis der Gehalt an freien NCO-Gruppen weniger als 0,1 % beträgt und nicht weiter abnimmt. Die Schmelze wird zum Erkalten auf ein Blech gegossen, und man erhält ein lagerstabiles helles Festharz mit einem Schmelzpunkt (DTA) von ca. 55°C, einem Gehalt an blockierten NCO-Gruppen von 12,2 % und an freien NCO-Gruppen von 0,7 %.

### Polyisocyanat-modifiziertes Polyanhydrid C2-a)

1000 Gew.-Teile Dodecandisäure werden unter Stickstoff mit 200 Gew.-Teilen eines Isocyanuratgruppen aufweisenden Polyisocyanates auf Basis von Hexamethylendiisocyanat mit einem Isocyanatgehalt von 21,5 % und einer Viskosität bei 23°C von 3000 mPa.s sowie 240 Gew.-Teilen Acetanhydrid gemischt, auf 125°C erwärmt und 4 h bei dieser Temperatur nachgerührt. Anschließend wird die entstandene Essigsäure im schwachen N₂-Strom abdestilliert und man erhält ein farbloses kristallines Produkt mit einem Schmelzbereich (DTA) von 84 bis 104°C, einem Gehalt an Carboxylgruppen (berechnet als CO₂H; Molekulargewicht = 45) von 11,8 %, an Carbonsäureanhydridgruppen (berechnet als C₂O₃; Molekulargewicht = 72) von 15,6 % und an in Form von Amidund/oder Harnstoffgruppen vorliegendem Stickstoff von 1,3 %. Das Äquivalentgewicht berechnet sich zu 144 g/Carboxyl-Äquivalent.

### β-Hydroxyalkylammid D-a)

900 Gew.-Teile Adipinsäuredimethylester werden mit 100 Gew.-Teilen Glutarsäuredimethylester, 1460 Gew.-Teilen Diethanolamin und 5 Gew.-Teilen Kaliumhydroxid in einem Rührgefäß mit Destillationsaufsatz gemischt und auf eine Temperatur von 100 bis 110°C erwärmt. Dabei destilliert das entstehende Methanol aus der Reaktionsmischung ab. Nachdem etwa 200 Gew.-Teile Methanol abgetrennt sind, wird an die Reaktionsapparatur ein Vakuum von etwa 150 mbar angelegt, worauf weitere etwa 100 Gew.-Teile Methanol abdestillieren.

Anschließend wird die Destillationsbrücke entfernt und die Reaktionsmischung mit 350 Gew.-Teilen frischem Methanol und 2 1 Aceton versetzt. Der ausfallende Niederschlag wird abgesaugt, mit Aceton nachgewaschen und getrocknet. Man erhält ein blaß gelbes Pulver mit einem Schmelzpunkt von 118 bis 120°C. Das Äquivalentgewicht beträgt 80 g/val Hydroxyethylamidgruppen.

### Beispiel 1

38,8 Gew.-Teile eines hydroxylgruppenhaltigen Polyesters, der aus 66,6 Gew.-Teilen Terephthalsäure, 38,2 Gew.-Teilen Neopentylglykol, 5,3 Gew.-Teilen 1,6-Hexandiol und 4,5 Gew.-Teilen 1,1,1-Trimethylolpropan hergestellt wurde und eine OH-Zahl von 50 und einen Schmelzbereich (DTA) von 55 bis 60°C aufweist, werden mit 12,2 Gew.-Teilen des blockierten Polyisocyanates B-a), entsprechend einem Äquivalentverhältnis von Gesamt-NCO zu OH von 1:1, 7,0 Gew.-Teilen Dodecandisäure und 5,0 Gew.-Teilen des β-Hydroxylamids D-a), entsprechend einem Äquivalentverhältnis von Carboxyl-Äquivalenten zu gegenüber Carboxylund/oder Carbonsäureanhydridgruppen reaktiven Gruppen von 1:1, 1,0 Gew.-Teilen eines handelsüblichen Verlaufsmittels auf Polybutylacrylatbasis (Modaflow PIII®; Fa. Monsanto), 1,0 Gew.-Teilen Zinn(II)octanoat als Katalysator, 1,1 Gew.-Teilen Flammruß 101® (Fa. Degussa) sowie 33,9 Gew.-Teilen eines handelsüblichen Füllstoffs (Blanc Fix M®, Fa. Sachtleben) gründlich gemischt und anschließend mit Hilfe eines Buss Cokneters vom Typ PLK 46 bei 150 U/min und einer Gehäusetemperatur von 60°C im Einzugsbereich sowie an der Welle bzw. von 100°C im Verfahrensteil homogenisiert, wobei Massetemperaturen von 90 bis 100°C erreicht werden. Die erstarrte Schmelze wird mit Hilfe einer Sichtermühle ACM 2 (Fa. Hosokawa Mikropul) mit einem 90 µm Sieb gemahlen und gesiebt. Das so erhaltene Pulver wird mit einer ESB Becherpistole bei einer Hochspannung von 70 kV auf ein entfettetes Stahlblech gespritzt und 30 min bei 180°C zu einer glattverlaufenden, schwarzmatten Beschichtung ausgehärtet.

Bei einer Schichtdicke von ca. 65 µm werden folgende lacktechnische Eigenschaften gefunden:

| ET^{a)} | | 9,0 |
|---|---|---|
| Glanz ^{b)} | 20° | 0,6 |
| | 60° | 8,0 |
| Ac^{c)} | DH | 50 |
| | Urteil | 0-1 1 |

| | | |
|---|---|---|
| a) ET = Erichsentiefung nach DIN 53 156 | | |
| b) Glanz = Glanz nach Gardner, 20° bzw. 60° Reflexionswinkel | | |
| c) AC = Acetontest; DH = Anzahl der Doppelhübe mit getränktem Wattebausch Urteil = 0 = Film intakt 1 = Filmoberfläche angeweicht 2 = Film bis zum Untergrund angequollen | | |

### Beispiel 2

Auf Basis des in Beispiel 1 beschriebenen hydroxylgruppenhaltigen Polyesters wurden nach dem in Beispiel 1 beschriebenen Verfahren Pulverlacke folgender Zusammensetzung (Gew.-Teile) hergestellt.

| Beispiel | | 2 | 3 | 4 | 5 (Vergleich) | 6 (Vergleich) |
|---|---|---|---|---|---|---|
| Polyester gemäß Beispiel 1 | | 37,0 | 40,6 | 38,0 | 43,4 | 44,1 |
| blockiertes Polyisocyanat | B-a) | - | - | - | 13,6 | 13,9 |
| | B-b) | 14,0 | - | - | - | - |
| | B-c) | - | 10,4 | - | - | - |
| | B-d) | - | - | 11,0 | - | - |
| Polyanhydrid | C2-a) | - | - | 9,0 | 6,0 | - |
| Dodecandisäure | | 7,0 | 7,0 | - | - | - |
| β-Hydroxyalkylamid | D-a) | 5,0 | 5,0 | 5,0 | - | 5,0 |
| Modaflow PIII® | | 1,0 | 1,0 | 1,0 | 1,0 | 1,0 |
| Zinn(II)octanoat® | | 1,0 | 1,0 | 1,0 | 1,0 | 1,0 |
| Flammruß 101® | | 1,1 | 1,1 | 1,1 | 1,1 | 1,1 |
| Blanc Fix M® | | 33,9 | 33,9 | 33,9 | 33,9 | 33,9 |

Die Pulver werden mit einer ESB-Becherpistole bei einer Hochspannung von 70 kV auf entfettete Stahlbleche gespritzt und jeweils 30 min bei 180°C ausgehärtet.

Bei Schichtdicken von 60 ± 5 µm werden folgende lacktechnische Eigenschaften gefunden:

| | | 2 | 3 | 4 | 5 (Vergleich) | 6 (Vergleich) |
|---|---|---|---|---|---|---|
| ET^{a)} | | >9,0 | 9,0 | 9,0 | 1,0 | 0,5 |
| Glanz^{b)} | 20° | 0,4 | 3,1 | 2,2 | 36 | 31 |
| | 60° | 6,3 | 28 | 18 | 79 | 77 |
| Ac^{c)} | DH | 50 | 50 | 50 | 50 | 50 |
| | Urteil | 0-1 | 1 | 1 | 2 m | 2 m |

| | | | | | | |
|---|---|---|---|---|---|---|
| a) ET = Erichsentiefung nach DIN 53 156 | | | | | | |
| b) Glanz = Glanz nach Gardner, 20° bzw. 60° Reflexionswinkel | | | | | | |
| c) AC = Acetontest; DH = Anzahl der Doppelhübe mit getränktem Wattebausch Urteil = 0 = Film intakt 1 = Filmoberfläche angeweicht 2 = Film bis zum Untergrund angequollen m = matt (Glanzverlust) | | | | | | |

Die Vergleichsbeispiele zeigen, daß der Zusatz von nur einer weiteren, beispielsweise nur einer Carboxylgruppen und/oder Carbonsäureanhydridgruppen aufweisenden Komponente (Vergleichsbeispiel 5) oder nur einer gegenüber Carboxyl- und/oder Carbonsäureanhydridgruppen reaktive Gruppen aufweisenden Komponente (Vergleichsbeispiel 6) zu einem aus einem Polyesterpolyol und einem blockierten Polyisocyanat bestehenden Polyurethansystem zu Beschichtungen führt, die nicht matt sind, und nur mäßige Elastizitäten und Beständigkeitseigenschaften aufweisen.

### Beispiel 7 (Vergleich)

Aus 36,5 Gew.-Teilen des in Beispiel 1 beschriebenen hydroxylgruppenhaltigen Polyesters und 11,5 Gew.-Teilen des blockierten Polyisocyanates B-a), entsprechend einem Äquivalentverhältnis von Gesamt-NCO zu OH von 1:1, sowie 14,7 Gew.-Teilen eines carboxylgruppenhaltigen Polyesters, der aus 44,8 Gew-Teilen Terephthalsäure, 6,8 Gew.-Teilen Isophthalsäure, 48,9 Gew.-Teilen Neopentylglykol und 0,5 Gew.-Teilen Pentaerythrit hergestellt wurde und eine Säurezahl von 15,5 und einen Schmelzbereich (DTA) von 65 bis 70°C aufweist, und 0,3 Gew.-Teilen des β-Hydroxyalkylamids D-a), entsprechend einem Äquivalentverhältnis von Carboxylgruppen zu gegenüber Carboxylgruppen reaktiven Gruppen von 1:1, wird nach dem in Beispiel 1 beschriebenen Verfahren mit 1,0 Gew.-Teilen eines handelsüblichen Verlaufsmittels auf Polybutylacrylatbasis (Modaflow PIII®, Fa. Monsanto), 1,0 Gew.-Teilen eines handelsüblichen Füllstoffs (Blanc Fix M®, Fa. Sachtleben) ein schwarz pigmentierter Pulverlack hergestellt.

Das Pulver wird mit einer ESB Becherpistole bei einer Hochspannung von 70 kV auf ein entfettetes Stahlblech gespritzt und 30 min bei 180°C ausgehärtet.

Man erhält einen schwarzen glänzenden Lackfilm, der bei einer Schichtdicke von ca. 60 µm folgende Eigenschaften aufweist:

| | | |
|---|---|---|
| ET^{a)} | | 9,0 |
| Glanz^{b)} | 20° | 59 |
| | 60° | 86 |
| Ac^{c)} | DH | 50 |
| | Urteil | 2 m |

| | | |
|---|---|---|
| a) ET = Erichsentiefung nach DIN 53 156 | | |
| b) Glanz = Glanz nach Gardner, 20° bzw. 60° Reflexionswinkel | | |
| c) AC = Acetontest; DH = Anzahl der Doppelhübe mit getränktem Wattebausch Urteil = 0 = Film intakt 1 = Filmoberfläche angeweicht 2 = Film bis zum Untergrund angequollen m = matt (Glanzverlust) | | |

Das Vergleichsbeispiel zeigt, daß der Zusatz einer Kombination aus einem hochmolekularen Carboxylpolyester und einem gegenüber Carboxylgruppen reaktiven Vernetzer zu einem aus einem Polyester und einem blockierten Polyisocyanat bestehenden Polyurethansystem nicht zu einer matten, sondern zu einer glänzenden Beschichtung führt, die darüber hinaus eine nur mäßige Lösemittelbeständigkeit aufweist.

## Patentansprüche

1. Pulverlack zur Herstellung matter Beschichtungen aus
A) einer unterhalb von 40°C in fester und oberhalb von 130°C in flüssiger Form vorliegenden Hydroxylgruppen aufweisenden Bindemittelkomponente mit einer OH-Zahl von 25 bis 200 und einem mittleren (aus der Funktionalität und dem Hydroxylgehalt berechenbaren) Molekulargewicht von 400 bis 10000,
B) einem unterhalb von 40°C in fester und oberhalb von 125°C in flüssiger Form vorliegenden blockierte und gegebenenfalls freie Isocyanatgruppen aufweisenden Polyisocyanat auf Basis aliphatischer und/oder cycloaliphatischer Diisocyanate,
C) einer unterhalb von 40°C in fester und oberhalb von 160°C in flüssiger Form vorliegender Carboxyl- und/oder Carbonsäureanhydridgruppen aufweisenden Komponente, bestehend aus mindestens einer Komponente ausgewählt aus
C1) aliphatischen und/oder cycloaliphatischen Dicarbonsäuren mit 4 bis 20 Kohlenstoffatomen,
C2) monomeren und/oder polymeren gegebenfalls modifizierten Anhydriden derartiger Dicarbonsäuren und
C3) aliphatischen Hydroxycarbonsäuren mit 4 bis 18 Kohlenstoffatomen,
D) einer gegenüber Carboxyl- und/oder Carbonsäureanhydridgruppen reaktive Gruppen aufweisenden Komponente eines mittleren Molekulargewichts von 200 bis 5000,
und gegebenenfalls
E) aus der Pulverlacktechnologie bekannten Hilfs- und Zusatzstoffen,
**dadurch gekennzeichnet, daß** die Komponenten A), B), C) und D) in solchen Mengenverhältnissen vorliegen, daß auf jede Hydroxylgruppe der Komponente A) 0,6 bis 1,4 Isocyanatgruppen der Komponente B) entfallen, wobei unter Isocyanatgruppen der Komponente B) die Summe aus in mit Blockierungsmitteln blockierter Form vorliegenden Isocyanatgruppen und freien Isocyanatgruppen verstanden wird, auf jedes Carboxyl-Äquivalent der Komponente C) 0,3 bis 1,5 gegenüber Carboxyl- und/oder Carbonsäureanhydridgruppen reaktive Gruppen der Komponente D) entfallen, wobei eine Carboxylgruppe einem und eine Carbonsäureanhydridgruppe zwei Carboxyl-Äquivalenten entspricht, und der Anteil der Komponenten C) und D) bezogen auf die Gesamtmenge der Komponenten A), B), C) und D) 10 bis 40 Gew.-% beträgt.

2. Pulverlack gemäß Anspruch 1, **dadurch gekennzeichnet, daß** die Komponente A) aus einem Hydroxylgruppen aufweisenden Polyester mit einer Erweichungstemperatur, die - bestimmt nach der Differential-Thermoanalyse (DTA) - innerhalb des Temperaturbereiches von 40 bis 120°C liegt, einer OH-Zahl von 25 bis 200 und einem mittleren (aus der Funktionalität und dem Hydroxylgehalt berechenbaren) Molekulargewicht von 1000 bis 5000 besteht.

3. Pulverlack gemäß Anspruch 1, **dadurch gekennzeichnet, daß** die Komponente B) aus einem blockierten Polyisocyanat mit einem Gehalt an blockierten Isocyanatgruppen von 8 bis 17 Gew.-% und einem Gehalt an freien Isocyanatgruppen von weniger als 1 Gew.-% besteht.

4. Pulverlack gemäß Anspruch 1, **dadurch gekennzeichnet, daß** die Komponente B) aus einem blockierte und gegebenenfalls freie Isocyanatgruppen aufweisenden Polyisocyanat auf Basis von Isophorondiisocyanat, 4,4'-Diisocyanatodicyclohexylmethan, 2,4(6)-Diisocyanato- -methylcyclohexan oder beliebigen Gemischen dieser Diisocyanate besteht.

5. Pulverlack gemäß Anspruch 1, **dadurch gekennzeichnet, daß** die Komponente C) aus mindestens einer gesättigten aliphatischen Dicarbonsäure mit 4 bis 12 Kohlenstoffatomen besteht.

6. Pulverlack gemäß Anspruch 1, **dadurch gekennzeichnet, daß** die Komponente C) aus mindestens einem monomeren oder polymeren Anhydrid einer gesättigten aliphatischen Dicarbonsäure mit 4 bis 12 Kohlenstoffatomen besteht.

7. Pulverlack gemäß Anspruch 1, **dadurch gekennzeichnet, daß** die Komponente C) aus mindestens einem Polyisocyanat-modifizierten Dicarbonsäure(poly)anhydrid auf Basis einer gesättigten aliphatischen, 4 bis 12 Kohlenstoffatome aufweisenden Dicarbonsäure mit einem Gehalt an Carboxylgruppen (berechnet als CO₂H; Molekulargewicht = 45) von 0,5 bis 30 Gew.-%, einem Gehalt an Carbonsäureanhydridgruppen (berechnet als C₂O₃; Molekulargewicht = 72) von 5 bis 35 Gew.-% und einem Gehalt an in Amid- und/oder Harnstoffgruppen gebunden vorliegendem Stickstoff von 0,2 bis 8 Gew.-% besteht.

8. Pulverlack gemäß Anspruch 1, **dadurch gekennzeichnet, daß** die Komponente D) aus Triglycidylisocyanurat und/oder dessen Oligomeren oder einem β-Hydroxyalkylamid auf Basis gesättigter Dicarbonsäuren mit 4 bis 12 Kohlenstoffatomen besteht.

9. Pulverlack gemäß Anspruch 1, **dadurch gekennzeichnet, daß** die Komponente D) aus einem β-Hydroxyalkylamid, hergestellt durch Umsetzung von Diethanolamin mit einem Gemisch aus Adipinsäuredimethylester und Glutarsäuredimethylester, besteht.

10. Verwendung des Pulverlacks gemäß Anspruch 1 zur Beschichtung beliebiger hitzeresistenter Substrate.

## Claims

1. Coating powder for the production of matt coatings consisting of
A) a binding-agent component having hydroxyl groups which is present in solid form below 40°C and in liquid form above 130°C with an OH number of 25 to 200 and an average (calculable from the functionality and the hydroxyl content) molecular weight between 400 and 10,000,
B) a polyisocyanate having blocked and optionally free isocyanate groups which is present in solid form below 40°C and in liquid form above 125°C and based on aliphatic and/or cycloaliphatic diisocyanates,
C) a component having carboxyl groups and/or carboxylic anhydride groups which is present in solid form below 40°C and in liquid form above 160°C, consisting of at least one component selected from
C1) aliphatic and/or cycloaliphatic dicarboxylic acids having 4 to 20 carbon atoms,
C2) monomeric and/or polymeric optionally modified anhydrides of such dicarboxylic acids and
C3) aliphatic hydroxycarboxylic acids having 4 to 18 carbon atoms,
D) a component having groups that are reactive with respect to carboxyl groups and/or carboxylic anhydride groups and having an average molecular weight between 200 and 5,000,
and optionally
E) auxiliary substances and additives known from powder-coating technology,
**characterised in that** Components A), B), C) and D) are present in such relative proportions that 0.6 to 1.4 isocyanate groups of Component B) are allotted to each hydroxyl group of Component A), whereby isocyanate groups of Component B) are to be understood to mean the sum of isocyanate groups that are present in a form blocked with blocking agents and of free isocyanate groups, 0.3 to 1.5 groups of Component D) that are reactive with respect to carboxyl groups and/or carboxylic anhydride groups are allotted to each carboxyl equivalent of Component C), whereby one carboxyl group corresponds to one carboxyl equivalent and one carboxylic anhydride group corresponds to two carboxyl equivalents, and the proportion of Components C) and D) relative to the total quantity of Components A), B), C) and D) amounts to between 10 and 40 wt-%.

2. Coating powder according to claim 1, **characterised in that** Component A) consists of a polyester containing hydroxyl groups with a softening temperature which - determined by differential thermoanalysis (DTA) - lies within the temperature range from 40 to 120°C, an OH number from 25 to 200 and an average (calculable from the functionality and the hydroxyl content) molecular weight between 1,000 and 5,000.

3. Coating powder according to claim 1, **characterised in that** Component B) consists of a blocked polyisocyanate with a content of blocked isocyanate groups amounting to 8 to 17 wt-% and a content of free isocyanate groups amounting to less than 1 wt-%.

4. Coating powder according to claim 1, **characterised in that** Component B) consists of a polyisocyanate having blocked and optionally free isocyanurate groups and based on isophorone diisocyanate, 4,4'-diisocyanatodicyclohexylmethane, 2,4(6)-diisocyanato-1-methylcyclohexane or arbitrary mixtures of these diisocyanates.

5. Coating powder according to claim 1, **characterised in that** Component C) consists of at least one saturated aliphatic dicarboxylic acid having 4 to 12 carbon atoms.

6. Coating powder according to claim 1, **characterised in that** Component C) consists of at least one monomeric or polymeric anhydride of a saturated aliphatic dicarboxylic acid having 4 to 12 carbon atoms.

7. Coating powder according to claim 1, **characterised in that** Component C) consists of at least one polyisocyanate-modified dicarboxylic (poly)anhydride based on a saturated aliphatic dicarboxylic acid having 4 to 12 carbon atoms with a content of carboxyl groups (calculated as CO₂H; molecular weight = 45) amounting to 0.5 to 30 wt-%, a content of carboxylic anhydride groups (calculated as C₂O₃; molecular weight = 72) amounting to 5 to 35 wt-% and a content of nitrogen that is present bonded within amide and/or urea groups amounting to between 0.2 and 8 wt-%.

8. Coating powder according to claim 1, **characterised in that** Component D) consists of triglycidyl isocyanurate and/or the oligomers thereof or a β-hydroxyalkylamide based on saturated dicarboxylic acids having 4 to 12 carbon atoms.

9. Coating powder according to claim 1, **characterised in that** Component D) consists of a β-hydroxyalkylamide produced by reaction of diethanolamine with a mixture consisting of adipic dimethyl ester and glutaric dimethyl ester.

10. Use of the coating powder according to claim 1 for coating arbitrary heat-resistant substrates.

## Revendications

1. Vernis en poudre conçu pour l'application de revêtements mats, consistant en
A) un composant liant à groupes hydroxy solide au-dessous de 40°C et liquide au-dessus de 130°C, avec un indice d'OH de 25 à 200 et un poids moléculaire moyen (calculé à partir de la fonctionnalité et de la teneur en groupes hydroxy) de 400 à 10 000,
B) un polyisocyanate à groupes isocyanate bloqués et éventuellement groupes isocyanate libres, solide au-dessous de 40°C et liquide au-dessus de 125°C, à base de diisocyanates aliphatiques et/ou cydoaliphatiques,
C) un composant à groupes carboxyle et/ou anhydride d'acide carboxylique solide au-dessous de 40°C et liquide au-dessus de 160°C, consistant en au moins un composant choisi parmi les suivants
C1) les acides dicarboxyliques aliphatiques et/ou cycloaliphatiques en C₄-C₂₀,
C2) les anhydrides monomères et/ou éventuellement à modification polymère de ces acides dicarboxyliques, et
C3) les acides hydroxycarboxyliques aliphatiques en C₄-C₁₈,
D) un composant à groupes réactifs à l'égard des groupes carboxyle et/ou anhydride d'acide carboxylique, à un poids moléculaire moyen de 200 à 5000,
et le cas échéant,
E) les produits auxiliaires et additifs connus dans la technique des vernis en poudre,
**caractérisé en ce que** les composants A), B), C) et D) sont présents dans des proportions relatives telles que, pour chaque groupe hydroxy du composant A), il y ait 0,5 à 1,4 groupe isocyanate du composant B), les groupes isocyanate du composant B) consistant en la somme des groupes isocyanate bloqués et des groupes isocyanate libres, pour chaque équivalent de groupe carboxyle du composant C), il y ait 0,3 à 1,5 groupe réactif avec les groupes carboxyle et/ou les groupes anhydrides d'acide carboxylique du composant D), un groupe carboxyle correspondant à un équivalent de groupe carboxyle et un groupe anhydride d'acide carboxylique à deux équivalents de groupe carboxyle, et la proportion relative des composants C) et D), rapportée à la quantité totale des composants A), B), C) et D), représente 10 à 40 % en poids.

2. Vernis en poudre selon la revendication 1, **caractérisé en ce que** le composant A) consiste en un polyester à groupes hydroxy ayant une température de ramollissement - déterminée par thermoanalyse différentielle - dans l'intervalle de 40 à 120°C, un indice d'OH de 25 à 200 et un poids moléculaire moyen (calculé à partir de la fonctionnalité et de la teneur en groupes hydroxy) de 1000 à 5000.

3. Vernis en poudre selon la revendication 1, **caractérisé en ce que** le composant B) consiste en un polyisocyanate bloqué à une teneur en groupes isocyanate bloqués de 8 à 17 % en poids et une teneur en groupes isocyanate libres inférieure à 1 % en poids.

4. Vernis en poudre selon la revendication 1, **caractérisé en ce que** le composant B) consiste en un polyisocyanate contenant des groupes isocyanate bloqués et le cas échéant des groupes isocyanate libres, à base de l'isophoronediisocyanate, du 4,4'-diisocyanatodicyclohexylméthane, du 2,4(6)-diisocyanato-1-méthylcyclohexane ou de mélanges quelconques de ces diisocyanates.

5. Vernis en poudre selon la revendication 1, **caractérisé en ce que** le composant C) consiste en au moins un acide dicarboxylique aliphatique saturé en C₄-C₁₂.

6. Vernis en poudre selon la revendication 1, **caractérisé en ce que** le composant C) consiste en au moins un anhydride monomère ou polymère d'un acide dicarboxylique aliphatique saturé en C₄-C₁₂.

7. Vernis en poudre selon la revendication 1, **caractérisé en ce que** le composant C) consiste en au moins un (poly)anhydride d'acide dicarboxylique à modification polyisocyanate à base d'un acide dicarboxylique aliphatique saturé en C₄-C₁₂, à une teneur en groupes carboxyle (exprimée en CO₂H, poids moléculaire 45) de 0,5 à 30 % en poids, une teneur en groupes anhydride d'acide carboxylique (exprimée en C₂O₃, poids moléculaire 72) de 5 à 35 % en poids et une teneur en azote à l'état de groupes amide et/ou urée de 0,2 à 8 % en poids.

8. Vernis en poudre selon la revendication 1, **caractérisé en ce que** le composant D) consiste en l'isocyanurate de triglycidyle et/ou ses oligomères ou en un β-hydroxyalkylamide à base d'acides dicarboxyliques saturés en C₄-C₁₂.

9. Vernis en poudre selon la revendication 1, **caractérisé en ce que** le composant D) consiste en un β-hydroxyalkylamide préparé par réaction de la diéthanolamine avec un mélange d'adipate de diméthyle et de glutarate de diméthyle.

10. Utilisation du vernis en poudre selon la revendication 1 pour le revêtement de supports quelconques résistant à la chaleur.
